# EUROPEAN PATENT APPLICATION

(11) **EP 4 813 480 A1**
(43) Date of publication of application: **30.09.2026**
(21) Application number: 26165266.3
(22) Date of filing: 17.03.2026
(51) Int. Cl.: A63F 13/213, A63F 13/22, A63F 13/843

(54) **COMPUTER-IMPLEMENTED METHOD, COMPUTER PROGRAM, AND SYSTEM**

(30) Priority: 24.03.2025 JP 2025048299
(71) Applicant: Nintendo Co., Ltd., Kyoto-shi, Kyoto 601-8501 (JP)
(72) Inventor: SUZUKI, Toshiaki, Kyoto 601-8501 (JP); UTSUGI, Shun, Kyoto 601-8501 (JP); KOMURA, Rui, Tokyo 151-0051 (JP)
(74) Representative: Lorenz Seidler Gossel Part. mbB

(57) **Abstract**

A computer-implemented method includes: acquiring a video image captured by a camera; moving a pointer corresponding to each of a plurality of controllers based on an input to each of the plurality of controllers; setting a position of the pointer corresponding to each controller; progressing a game in which a player corresponding to each of the plurality of controllers participates; and displaying, at a position corresponding to each player in an image of the game, a second video image of each player generated from the video image based on the set position of the pointer corresponding to each controller.

## Description

The present disclosure relates to a computer-implemented method, a computer program, and a system.

### INTRODUCTION

A system is known that displays a moving image that is captured by a camera and that may include a user together with a game image (for example, Japanese Patent Laying-Open No. 2012-174237).

### SUMMARY

There is room for improvement in a process of displaying an image of a user together with an image of a game.

(Configuration 1) A computer-implemented method according to an embodiment includes acquiring a video image captured by a camera, moving a pointer corresponding to each of a plurality of controllers based on an input to each of the plurality of controllers, setting a position of the pointer corresponding to each controller, progressing a game in which a player corresponding to each of the plurality of controllers participates, and display, at a position corresponding to each player in an image of the game, a second video image of each player generated from the video image based on the set position of the pointer corresponding to each controller.

(Configuration 2) In the configuration 1, the computer-implemented method may include displaying the video image and moving, based on an input to each of the plurality of controllers, the pointer corresponding to each controller on the displayed video image.

(Configuration 3) In the configuration 1 or 2, the computer-implemented method may include recognizing a face of each of one or more persons included in the video image and arranging each pointer at a position indicating the face of the corresponding recognized person.

(Configuration 4) In any one of the configurations 1 to 3, the computer-implemented method may include moving each pointer to a position indicating a face closest to a current position of the respective pointer based on an input to each of the plurality of controllers.

(Configuration 5) In any one of the configurations 1 to 4, the displayed video image may be masked in an area other than a region including at least a face of one or more persons within a field of view of the camera.

(Configuration 6) In any one of the configurations 1 to 5, the computer-implemented method may include changing, based on an input to at least one of the plurality of controllers, a display range of the displayed video image and moving the pointer corresponding to each controller on the video image having the changed display range.

(Configuration 7) In any one of the configurations 1 to 6, the computer-implemented method may include changing a shape of a range indicated by the pointer corresponding to each controller based on an input to the corresponding controller and generating, based on a position of the pointer corresponding to each controller and the range indicated by the pointer, the second video image of each player from the video image.

(Configuration 8) In any one of the configurations 1 to 7, the computer-implemented method may include displaying a reference video image indicating a range of the video image corresponding to a current position of the pointer corresponding to each controller while the pointer is being moved based on an input to the corresponding controller.

(Configuration 9) In any one of the configurations 1 to 8, the computer-implemented method may include changing a shape of a range indicated by the pointer corresponding to each controller based on an input to the corresponding controller and displaying a reference video image indicating a range of the video image corresponding to a current position of the pointer corresponding to each controller while the pointer is being moved based on an input to the corresponding controller. A display size of the reference video image may be constant regardless of a size of the range indicated by the pointer.

(Configuration 10) In any one of the configurations 1 to 9, a position of the pointer may be allowed to overlap with a position of another pointer.

(Configuration 11) In any one of the configurations 1 to 10, the game may be a game that communicates with another information processing apparatus. The computer-implemented method may include receiving, from the other information processing apparatus, a received video image based on a video image in the other information processing apparatus and position information based on a position of a pointer set in the other information processing apparatus, and displaying a third video image generated from the received video image based on the position information received from the other information processing apparatus at a position corresponding to a player of the other information processing apparatus in the image of the game.

(Configuration 12) In any one of the configurations 1 to 11, the computer-implemented method may include moving one pointer corresponding to a controller based on an input to the one controller, setting a position of the one pointer, progressing a game in which one player corresponding to the one controller participates, and displaying, at a position corresponding to the one player in the image of the game, a second video image of the one player generated from the video image based on the set position of the one pointer.

(Configuration 13) In any one of the configurations 1 to 12, the computer-implemented method may include displaying, at a position corresponding to one player in the image of the game, a video image of a predetermined range within a field of view of the camera while the game in which the one player corresponding to one controller participates is in progress.

(Configuration 14) According to an embodiment, a method executed by one or more computers is provided. The method comprises acquiring a video image captured by a camera, moving a pointer corresponding to each of a plurality of controllers based on an input to each of the plurality of controllers, setting a position of the pointer corresponding to each controller, progressing a game in which a player corresponding to each of the plurality of controllers participates, and displaying, at a position corresponding to each player in an image of the game, a second video image of each player generated from the video image based on the set position of the pointer corresponding to each controller.

(Configuration 15) A system according to an embodiment acquires a video image captured by a camera, moves a pointer corresponding to each of a plurality of controllers based on an input to each of the plurality of controllers, sets a position of the pointer corresponding to each controller, progresses a game in which a player corresponding to each of the plurality of controllers participates, and displays, at a position corresponding to each player in an image of the game, a second video image of each player generated from the video image based on the set position of the pointer corresponding to each controller.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting schematic diagram showing a configuration example of a game apparatus according to this embodiment.
FIG. 2 shows an exemplary illustrative non-limiting schematic diagram showing a configuration example of a system including a game apparatus according to this embodiment.
FIG. 3 shows an exemplary illustrative non-limiting schematic diagram showing a hardware configuration example of a game apparatus according to this embodiment.
FIG. 4 shows an exemplary illustrative non-limiting schematic diagram showing a hardware configuration example of a controller according to this embodiment.
FIG. 5 shows an exemplary illustrative non-limiting schematic diagram showing an example of a setting screen provided in a game apparatus according to this embodiment.
FIG. 6 shows an exemplary illustrative non-limiting schematic diagram for explaining a change example of a display range of a video image in a setting screen.
FIG. 7 shows an exemplary illustrative non-limiting schematic diagram for explaining a change example of a range indicated by a pointer in a setting screen.
FIGS. 8A and 8B show exemplary illustrative non-limiting schematic diagrams for explaining a mask process example of a video image in a setting screen.
FIG. 9 shows an exemplary illustrative non-limiting schematic diagram showing a display example of a reference video image in a setting screen.
FIG. 10 shows an exemplary illustrative non-limiting schematic diagram for explaining a positioning process example of a pointer in a setting screen.
FIG. 11 shows an exemplary illustrative non-limiting schematic diagram showing another example of a setting screen provided in a game apparatus according to this embodiment.
FIG. 12 shows an exemplary illustrative non-limiting schematic flowchart showing a process example executed by a game apparatus according to this embodiment.
FIG. 13 shows an exemplary illustrative non-limiting schematic flowchart showing a process example when a game apparatus according to this embodiment executes a communication type game.
FIG. 14 shows an exemplary illustrative non-limiting schematic diagram for explaining an example of a chat screen generated in a game apparatus according to this embodiment.
FIGS. 15A to 15C show exemplary illustrative non-limiting schematic diagrams for explaining examples of display mode in a game apparatus according to this embodiment.
FIGS. 16A and 16B show exemplary illustrative non-limiting schematic diagrams each showing an example of a selection screen regarding display mode in a game apparatus according to this embodiment.

### DETAILED DESCRIPTION

The present embodiment will be described in detail with reference to the drawings. Note that identical or corresponding parts in the drawings are denoted by the same reference numerals and description of the parts will not be repeated.

In this specification, even in a case where data is described using the same term, contents of the data do not necessarily match perfectly. At least in a case where both certain data and other data convey specific information, the data and the other data may be considered to be the same data. Further, a name given to data is for convenience and does not limit a range or a technical meaning indicated by the data.

In this specification, a program that causes a computer to execute a process may be a single program or may be a program group including a plurality of programs. In this disclosure, "program" does not necessarily mean a single program and may include a program group. Further, "program" does not need to be entirely stored in a single apparatus. "Program" may mean, for example, the entirety of a plurality of programs respectively stored in a plurality of apparatuses included in a computer.

In this specification, "computer" does not necessarily mean a single apparatus and may include an entirety in which a plurality of apparatuses are connected by wire or wirelessly. In a case where an information processing apparatus comprises a plurality of apparatuses, the entirety of the plurality of apparatuses may be an example of the information processing apparatus, and each of the plurality of apparatuses may be an example of the information processing apparatus.

In this specification, "system" does not necessarily mean a set of a plurality of information processing apparatuses and may include a single information processing apparatus. A single information processing apparatus may be a "system," or the entirety of a plurality of information processing apparatuses may be a "system."

### [A. Configuration Example]

A game apparatus 100 which is an example of an information processing apparatus will be described. The game apparatus 100 is also an example of a computer. The information processing apparatus is not limited to the game apparatus 100 and may be, for example, a personal computer, a television, a tablet terminal, a smartphone, a wearable terminal, a server, and the like.

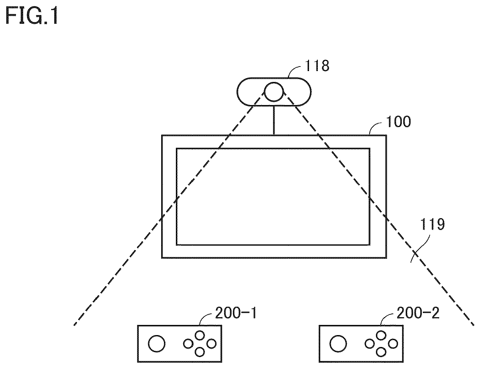

FIG. 1 is a schematic diagram showing a configuration example of the game apparatus 100 according to this embodiment. Referring to FIG. 1, the game apparatus 100 is capable of communicating with one or more controllers 200. In the following description, in a case where it is necessary to identify each of the plurality of controllers 200, branch numbers are added to distinguish the controllers (for example, controllers 200-1 and 200-2 shown in FIG. 1).

The game apparatus 100 may be connected to one or more controllers 200 by wire or may be connected to one or more controllers 200 wirelessly. In a case where a plurality of controllers 200 are connected to the game apparatus 100, the plurality of controllers 200 may be the same model or may be different models. Some controllers 200 may be connected to the game apparatus 100 by wire, and other controllers 200 may be connected to the game apparatus 100 wirelessly.

One user may operate one controller 200, or one user may operate two controllers 200.

The game apparatus 100 can utilize a camera 118. For example, the game apparatus 100 executes various processes using camera data captured by the camera 118. The camera data is, as an example, moving image data captured at a predetermined frame rate. The moving image data can also be said to be a set of still image data. Hereinafter, the moving image data captured by the camera 118 is also referred to as a "video image." The video image can be rephrased as an image captured by the camera 118 in real time.

The camera 118 generates a video image in which a subject within a field of view 119 is captured according to a command from the game apparatus 100 or according to a predetermined condition. The camera 118 includes, for example, an image sensor such as a CCD (Charge-Coupled Device) image sensor or a CMOS (Complementary Metal Oxide Semiconductor) image sensor. A lens may be arranged in front of the image sensor.

The game apparatus 100 may be connected to the camera 118 by wire or may be connected to the camera 118 wirelessly. The camera 118 may exist outside the game apparatus 100 or may be a part of the game apparatus 100. A plurality of cameras 118 may be connectable to the game apparatus 100.

The camera 118 may be, for example, a camera for video calls. The camera 118 may be a dedicated camera connectable only to a specific device or may be a general-purpose camera connectable to an arbitrary device. Further, the game apparatus 100 may utilize a camera of another information processing apparatus (for example, a smartphone). In this way, a configuration in which the game apparatus 100 utilizes the camera 118 is not limited. The game apparatus 100 may acquire the video image captured by the camera 118 by any method.

In the example shown in FIG. 1, two users can play a game together by respectively operating the controllers 200-1 and 200-2. At this time, if the two users exist in the field of view 119 of the camera 118, the camera 118 generates a video image including the two users as subjects. The game apparatus 100 can execute a process as described later using the video image including the two users as subjects.

Note that, for convenience of description, two controllers 200 are illustrated, but the number of controllers 200 connected to the game apparatus 100 is not limited. Further, the number of users who play a game together using the game apparatus 100 is also not limited.

The game apparatus 100 according to this embodiment may be capable of configuring a system 1 as shown below.

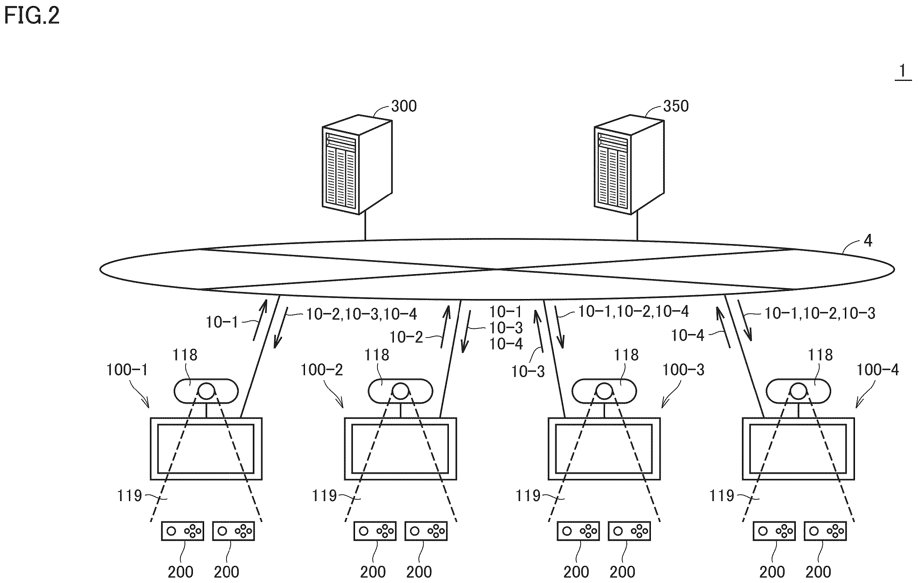

FIG. 2 is a schematic diagram showing a configuration example of the system 1 including the game apparatus 100 according to this embodiment. In the system 1 shown in FIG. 2, four game apparatuses 100 are connected via a network 4. In the following description, in a case where it is necessary to identify each of the plurality of game apparatuses 100, branch numbers are added to distinguish the game apparatuses (for example, game apparatuses 100-1, 100-2, 100-3, and 100-4 shown in FIG. 2).

In the system 1 according to this embodiment, a user using the game apparatus 100 has a user's own account, and the user's own account is associated with each game apparatus 100. A user having an account can cause the associated account to participate in one or more chat groups (hereinafter, also abbreviated as "groups") by performing a predetermined input to the game apparatus 100. A game apparatus 100 corresponding to an account belonging to any group transmits data used for communication between users (hereinafter, also referred to as "communication data 10") to another game apparatus 100 corresponding to another account belonging to the group. Thereby, communication between users is realized in the group.

The communication data 10 may include, for example, sound data acquired by the game apparatus 100, a video image acquired by the game apparatus 100, text data acquired by the game apparatus 100, information regarding an application being executed in the game apparatus 100 and the like. Note that all data do not need to be included in one communication data 10, and one data may be divided into a plurality of pieces of communication data 10. One communication data 10 may include a plurality of pieces of data.

Note that the game apparatuses 100 respectively corresponding to a plurality of accounts belonging to the same group do not need to have the same hardware configuration. For example, some game apparatuses 100 are dedicated game machines, and other game apparatuses 100 may be personal computers, televisions, tablet terminals, smartphones, wearable terminals, servers, and the like that can execute a game application.

Further, all of the game apparatuses 100 respectively corresponding to a plurality of accounts belonging to the same group do not need to be able to utilize the camera 118.

The system 1 may further include a management server 300 and a relay server 350. The management server 300 is responsible for a process of newly configuring a group, a process for one or more accounts to participate in a group and the like. The relay server 350 relays communication data 10 transmitted and received by one or more game apparatuses 100. The management server 300 and the relay server 350 may be implemented in a single physical server.

A method in which a certain game apparatus 100 transmits communication data 10 to one or more other game apparatuses 100 may be a method of directly transmitting communication data 10 to one or more other game apparatuses 100 (for example, a P2P method and the like) in addition to or instead of a method via one or more relay entities (for example, the relay server 350).

In the configuration example shown in FIG. 2, a certain game apparatus 100 can acquire a video image from one or more other game apparatuses 100. Each game apparatus 100 can execute a process as described later using at least one of a video image captured by a camera 118 of the game apparatus 100 or a received video image based on a video image captured by a camera 118 of one or more other game apparatuses 100.

### [B. Hardware Configuration Example]

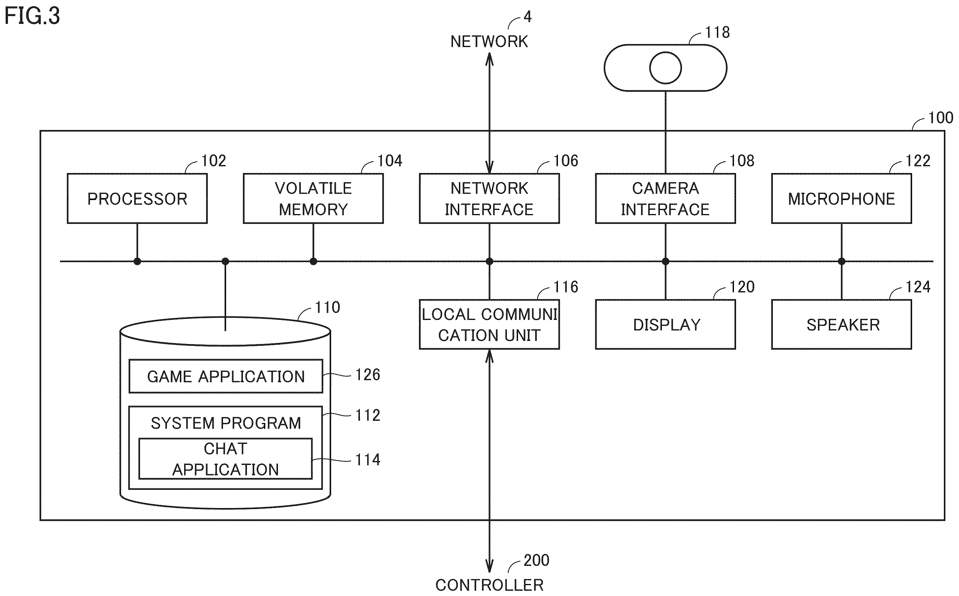

FIG. 3 is a schematic diagram showing a hardware configuration example of the game apparatus 100 according to this embodiment. Referring to FIG. 3, the game apparatus 100 includes, for example, one or more processors 102, one or more volatile memories 104, a network interface 106, a camera interface 108, one or more non-volatile memories 110, a local communication unit 116, a display 120, a microphone 122, and a speaker 124. Each component may be removable from a main body of the game apparatus 100.

The processor 102 is a processing entity for executing processes in the game apparatus 100. The processor 102 includes, for example, a CPU (Central Processing Unit), a GPU (Graphics Processing Unit), and the like. The processor 102 expands a program stored in the non-volatile memory 110 into the volatile memory 104 and executes the program.

The volatile memory 104 is a volatile storage medium accessible by the processor 102 and includes, for example, a DRAM (Dynamic Random Access Memory), an SRAM (Static Random Access Memory), and the like.

The non-volatile memory 110 is a non-volatile storage medium accessible by the processor 102 and includes, for example, a flash memory, a hard disk, and the like. The non-volatile memory 110 may include a storage medium detachable from the game apparatus 100, such as a cartridge or an optical disk. The non-volatile memory 110 is also referred to as storage.

The non-volatile memory 110 stores, for example, one or more programs such as a system program 112 and a game application 126.

The system program 112 includes computer-readable instructions for hardware control of the game apparatus 100, provision of a program execution environment and the like. The system program 112 may include one or more programs or program modules. For example, the system program 112 includes a chat application 114.

The chat application 114 executes a process regarding transmission and reception of communication data 10 between a plurality of game apparatuses 100 corresponding to a plurality of accounts belonging to a group (for example, refer to FIG. 2 described above).

The game application 126 includes computer-readable instructions for executing a game. A plurality of game applications 126 may be installed in the game apparatus 100. The game application 126 may be read from a separate storage medium. At least a part of game execution by the game application 126 may utilize another game apparatus 100 or may utilize an external resource such as a server. The system program 112 may include at least a part of the game application 126.

In this specification, "processor" can include at least a processing circuit that executes a process according to computer-readable instructions, such as a CPU or a GPU, and a hard-wired circuit such as an ASIC (Application Specific Integrated Circuit) or an FPGA (Field Programmable Gate Array). In this specification, "memory" may include at least the volatile memory 104 and the non-volatile memory 110, and may include other storage media and storage devices.

In the game apparatus 100, an SoC (System on Chip) in which functions such as a processor and a memory are integrated may be adopted. In this case, the processor and the memory may exist in the same SoC (integrated circuit). Therefore, in this specification, "processor" and "memory" can include at least both a configuration in which the processor and the memory are independent from each other and a configuration in which the processor and the memory are integrated with each other.

The network interface 106 performs data communication with another game apparatus 100, the management server 300, the relay server 350, and the like via the network 4. The network interface 106 may perform data communication with another game apparatus 100 and the like via the Internet which is an example of the network 4. The network 4 may be a wireless network according to Bluetooth^{®}, ZigBee^{®}, wireless LAN (IEEE 802.11 standard), and the like.

The camera interface 108 mediates data transmission to the camera 118 and data reception from the camera 118. The camera interface 108 may be connected to the camera 118 by wire or may be connected to the camera 118 wirelessly.

The local communication unit 116 mediates data communication with one or more controllers 200. The local communication unit 116 receives data according to an input to one or more controllers 200 and transmits a command to one or more controllers 200. The local communication unit 116 may mediate data communication with one or more other game apparatuses 100. The local communication unit 116 may utilize wireless communication according to Bluetooth^{®}, ZigBee^{®}, wireless LAN (IEEE 802.11 standard), and the like.

The display 120 displays an image or a video generated by a process by the processor 102. The display 120 includes, for example, an LCD (Liquid Crystal Display), an organic EL display, and the like. The display 120 may exist outside the game apparatus 100. In this case, the game apparatus 100 may include an interface circuit with the display 120.

The microphone 122 is arranged, for example, in a housing and the like of the game apparatus 100, and collects sounds to generate sound signals. The speaker 124 is arranged, for example, in a housing and the like of the game apparatus 100, and generates sounds from sound signals. At least one of the microphone 122 and the speaker 124 may exist outside the game apparatus 100.

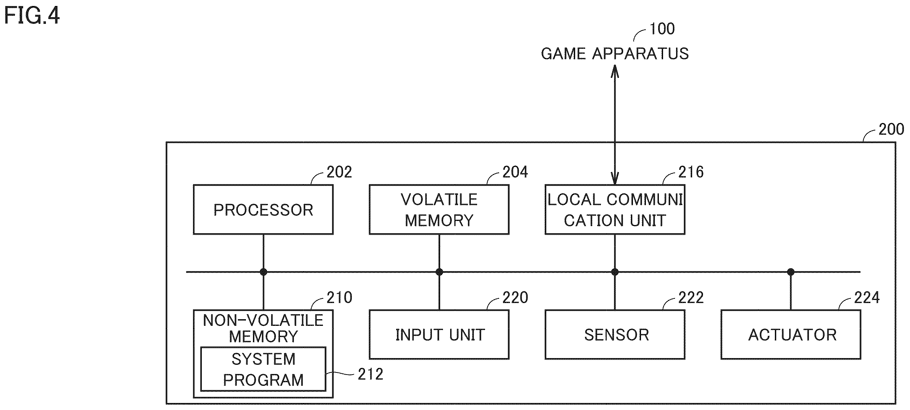

FIG. 4 is a schematic diagram showing a hardware configuration example of the controller 200 according to this embodiment. Referring to FIG. 4, the controller 200 includes, for example, one or more processors 202, one or more volatile memories 204, one or more non-volatile memories 210, a local communication unit 216, an input unit 220, a sensor 222, and an actuator 224.

The processor 202, the volatile memory 204, and the non-volatile memory 210 are respectively similar to the processor 102, the volatile memory 104, and the non-volatile memory 110 described above.

The local communication unit 216 is similar to the local communication unit 116 described above and mediates data communication with the game apparatus 100.

The input unit 220 receives an input to the controller 200. The input unit 220 may be, for example, a directional pad, a button, a lever, a stick, and the like.

The sensor 222 detects, for example, information regarding the controller 200 itself (for example, acceleration and the like) and information regarding the periphery of the controller 200 (for example, temperature and the like).

The actuator 224 may be, for example, a visible device such as an LED, an audible device such as a speaker or a buzzer, a device that gives tactile information to a user such as a vibrator and the like.

### [C. Process Example Using Camera Moving Image]

Next, a process example using a video image executed in the game apparatus 100 according to this embodiment will be described.

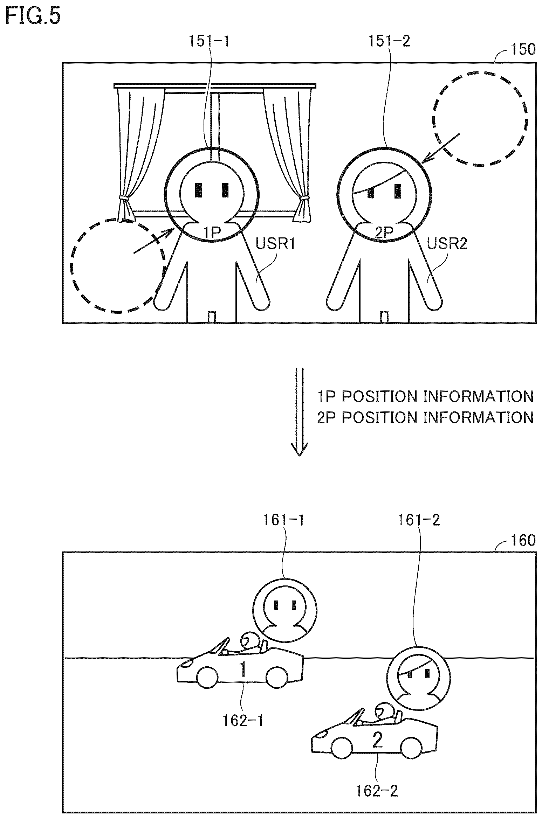

FIG. 5 is a diagram showing an example of a setting screen 150 provided in the game apparatus 100 according to this embodiment. The setting screen 150 shown in FIG. 5 is used, for example, for setting up use of a video image in a game provided by executing the game application 126. In a case where the game application 126 generates the setting screen 150, it can also be said that the setting screen 150 is a game image.

As an example, a case is assumed in which two users play a game together by respectively operating the controllers 200-1 and 200-2. In the game, as an example, it is assumed that the controller 200-1 is assigned to a first player (hereinafter, also described as "1P") and the controller 200-2 is assigned to a second player (hereinafter, also described as "2P"). In a situation shown in FIG. 5, a first user USR1 is operating the controller 200-1, and a second user USR2 is operating the controller 200-2. The first user USR1 recognizes that the first user USR1 is 1P, and the second user USR2 recognizes that the second user USR2 is 2P. Note that the number of players who can participate may be appropriately determined according to the game.

In this specification, the term "player" can be rephrased as a user participating in a game. The term "player" can include a subject participating in a game and a role in a game. For example, "player" can include a game object or a game character operated by a user or a computer.

In the setting screen 150 shown in FIG. 5, a video image captured by the camera 118 is displayed. In the example shown in FIG. 5, two users exist in the field of view 119 of the camera 118.

In the setting screen 150 shown in FIG. 5, one or more pointers 151 are displayed together with the video image. The pointer 151 may be used for specifying a range of the video image. In the following description, in a case where it is necessary to identify each of the plurality of pointers 151, branch numbers are added to distinguish the pointers (for example, pointers 151-1 and 151-2 shown in FIG. 5).

As an example, the pointer 151-1 is for 1P, and the pointer 151-2 is for 2P. The pointers 151-1 and 151-2 indicate at least a part of a range of the video image. As shown in FIG. 5, the pointer 151 may be displayed superimposed on the video image.

As an example, in each pointer 151, a text object (for example, "1P" and "2P") showing a correspondence with the controller 200 or the player is displayed. In addition to or instead of the text object, an object showing an appearance of the corresponding controller 200 may be displayed in the vicinity of each pointer 151, or a manner of display (for example, a display color and the like) of the pointer 151 may be made according to the corresponding controller 200 or the player.

Since 1P is assigned to the controller 200-1, the pointer 151-1 is associated with the controller 200-1. The first user USR1 operates the controller 200-1 so that a range indicated by the pointer 151-1 matches a range of a video image desired to be utilized in the game. The game apparatus 100 moves the pointer 151-1 corresponding to the controller 200-1 based on an input to the controller 200-1 (for example, a push of a stick corresponding to a movement direction and the like).

Similarly, since 2P is assigned to the controller 200-2, the pointer 151-2 is associated with the controller 200-2. The second user USR2 operates the controller 200-2 so that a range indicated by the pointer 151-2 matches a range of a video image desired to be utilized in the game. The game apparatus 100 moves the pointer 151-2 corresponding to the controller 200-2 based on an input to the controller 200-2.

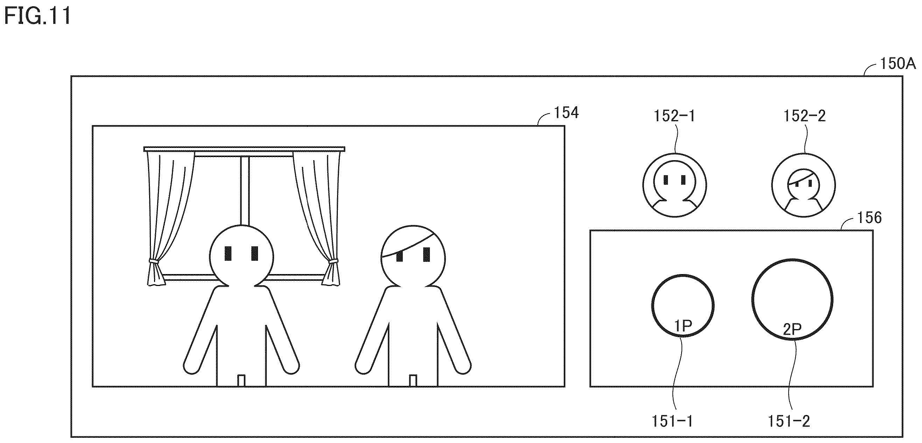

In the setting screen 150 shown in FIG. 5, the game apparatus 100 moves, based on an input to each controller 200, each pointer 151 corresponding to each controller 200 on the displayed video image. As shown in FIG. 11 described later, the pointer 151 may move to a region other than the displayed video image.

Each pointer 151 may be allowed to move so that a range indicated by the pointer 151 overlaps at least partially with a range indicated by another pointer 151. Furthermore, each pointer 151 may be moved so that a range indicated by a certain pointer 151 and a range indicated by another pointer 151 become identical. That is, a position of each pointer 151 may overlap at least partially with a position of another pointer 151. For example, the plurality of pointers 151 may each be able to move to an arbitrary position independently. By not providing restrictions on movement of each pointer 151, for example, even in a case where one user operates a plurality of controllers 200 to move a plurality of pointers 151 or the like, setting according to an intention of the user becomes possible.

Alternatively, for example, overlapping of a range indicated by a certain pointer 151 and a range indicated by another pointer 151 may not be allowed, or a restriction may be provided on an area for which overlapping is allowed.

When any user performs a predetermined operation, a position of each pointer 151 is set. The game apparatus 100 generates position information (for example, 1P position information and 2P position information) indicating the set position of each pointer 151. In the game, the video image is utilized based on the generated position information.

A process of setting a position of the pointer 151 may be any process, but may be, for example, a process as follows.

Setting of a position of the pointer 151 may be performed for each pointer 151 (or for each controller 200). For example, when a certain user operates the controller 200 and presses a decision button, a current position of the pointer 151 corresponding to the controller 200 at a timing when the decision button is pressed may be set as a final position.

Further, positions of all pointers 151 may be set collectively based on an input to a representative controller 200. For example, when a user corresponding to 1P (an example of a representative) operates the controller 200 and presses a decision button, current positions of the respective pointers 151 at a timing when the decision button is pressed may be respectively set as final positions. Further, when a timer started on some basis reaches time-up, current positions of the respective pointers 151 at a timing of the time-up may be respectively set as final positions.

The game apparatus 100 progresses a game in which a plurality of players corresponding respectively to a plurality of controllers 200 participate. The game apparatus 100 displays, at a position corresponding to each player in an image of the game, a partial video image of each player generated from the video image based on position information corresponding to each controller 200. For example, the game apparatus 100 generates a partial video image of each player from the video image based on a position of the pointer 151 corresponding to each controller 200 and a range indicated by the corresponding pointer 151.

FIG. 5 shows a game image 160 of a game in which two players respectively corresponding to the controllers 200-1 and 200-2 participate. In the game image 160, the first user USR1 operates a game object 162-1 using the controller 200-1, and the second user USR2 operates a game object 162-2 using the controller 200-2.

In the game image 160, a partial video image 161-1 generated from the video image based on 1P position information is displayed at a position corresponding to the game object 162-1. Similarly, a partial video image 161-2 generated from the video image based on 2P position information is displayed at a position corresponding to the game object 162-2. Since the partial video images 161-1 and 161-2 are based on the video image captured by the camera 118, if the partial video image 161 includes a user, facial expressions and the like of each user can be displayed in real time on the game image.

A process of generating a partial video image from a video image based on position information may be a process of cropping a portion of the video image without modification, may be a process of performing some image processing after cropping a part of the video image, or may be a process of cropping a part of the video image after performing some image processing on the video image.

The game application 126 being executed may be responsible for a process of acquiring the video image, generating the partial video image 161, and displaying the generated partial video image 161 at a position corresponding to each player in the image of the game. However, the game application 126 being executed does not need to be responsible for all processes. For example, the game application 126 being executed gives an image of a game to be generated and a position at which the partial video image 161 is to be displayed to the system program 112 being executed, and the system program 112 being executed may generate the partial video image 161 and superimpose the partial video image 161 on the predetermined position of the image of the game to output a final display image. In this way, the game application 126 may output the game image 160 including the partial video image 161 in cooperation with another program being executed.

In the example shown in FIG. 5, a circular frame showing a range of a partial video image is shown as an example of a pointer, but a shape of the frame may be any shape. The pointer may be, for example, a frame showing an arbitrary polygon (for example, a rectangle), an ellipse, or an arbitrary shape of which a part is open.

In a case where a frame is used as a pointer, a range indicated by the pointer and a range of a partial video image do not need to match perfectly. For example, a range that has entered inward by a predetermined distance from the frame may be cropped as a partial video image, or a range that has gone outward by a predetermined distance from the frame may be cropped as a partial video image. Further, for example, even in a case where a pointer is determined so as to surround a face of a person, a partial video image may include the face of the person and an upper body from the neck down.

A pointer does not need to be a frame, and may be, for example, an object of an arrow or a face mark.

Position information may include any data as long as the position information includes information necessary for generating a partial video image from a video image. Position information may include, for example, coordinates (for example, a set of an X-coordinate and a Y-coordinate) showing a position of a pointer (for example, a center point of a frame), or may include a plurality of coordinates defining a frame indicated by a pointer. Position information may include information showing a size of a frame (for example, a radius of a frame). Position information may include information showing a shape of a frame (for example, a rectangle, a hexagon, and the like).

Position information set in the setting screen 150 does not need to be updated during progress of a game, but may be updated in a case where a predetermined condition is satisfied, in a case where there is a user request, or in a similar case.

A partial video image of each player may be displayed at any position as long as it is shown that the partial video image corresponds to each player. Some specific examples will be described later.

In a game in which a plurality of players participate, it is considered to display, for example, a face and the like of a user operating each controller 200 at a position corresponding to a game object operated by each controller 200. However, in a case where a plurality of users exist in the field of view 119 of the camera 118, it may be difficult to recognize which controller 200 each user is operating. Therefore, a position of a pointer corresponding to each controller is set, and a partial video image of a range corresponding to the set position in the field of view 119 of the camera 118 is displayed. Thereby, for example, each user can reflect a face of the user at a position corresponding to an appropriate player in a game image even if the user does not move themself. Further, for example, in a case where a user operating the controller 200 changes, if the user gives way to a new user, it is easy to predict that the new user will be displayed in the game image, and usability is excellent.

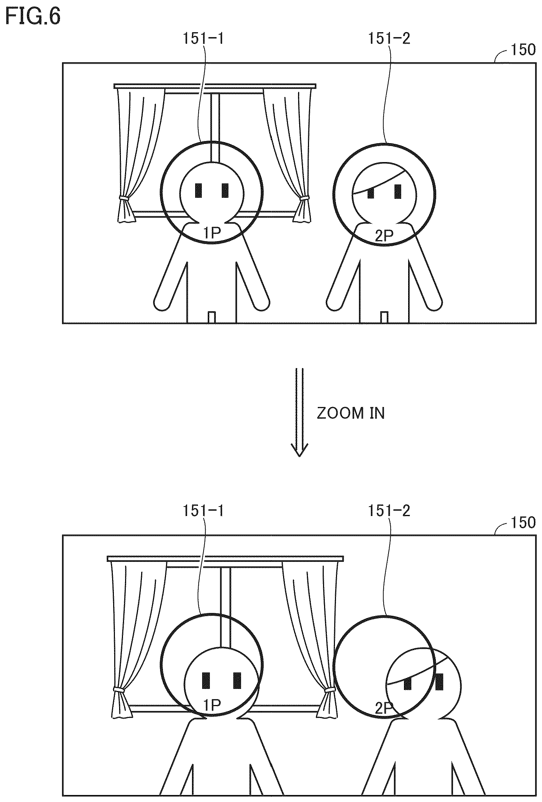

As an implementation example, in the setting screen 150, a display range of a video image may be fixed, but a display range of a video image may be changed according to a user operation. FIG. 6 is a diagram for explaining a change example of a display range of a video image in the setting screen 150.

As shown in FIG. 6, for example, by any user operating the controller 200, a video image displayed in the setting screen 150 may be zoomed in. By any user operating the controller 200, a video image may be zoomed out. A change of a display range of a video image may be a change in a vertical direction or a horizontal direction in addition to or instead of zooming in or zooming out.

A change of a display range of a video image may be realized using a zoom function of the camera 118 (for example, an optical zoom mechanism, a digital zoom function, and the like), or may be realized using a pan mechanism or a tilt mechanism of the camera 118 or a peripheral device of the camera 118.

Further, a change of a display range of a video image may be realized in the game apparatus 100 by arbitrarily setting a range to be displayed in the setting screen 150 among video images captured by the camera 118. A range set in a video image may be displayed in the setting screen 150 after being arbitrarily enlarged or reduced.

All controllers 200 connected to the game apparatus 100 may be able to change a display range of a video image, or a specific controller 200 may be able to change a display range of a video image.

In the example shown in FIG. 6, the pointer 151 is not changed even if a display range of a video image is changed, but a position of the pointer 151 or a range indicated by the pointer 151 may be changed according to a change of a display range of a video image.

Note that if any user exists outside the field of view 119 of the camera 118, the user may adjust the field of view 119 of the camera 118, or the user may move into the field of view 119 of the camera 118.

As shown in FIG. 6, the game apparatus 100 may change a display range of a displayed video image based on an input to at least one of the plurality of controllers 200. The game apparatus 100 moves the pointer 151 corresponding to each controller 200 on the video image of which the display range is changed. By changing a display range of a displayed video image, setting of the pointer 151 can be facilitated. Thereby, usability can be improved.

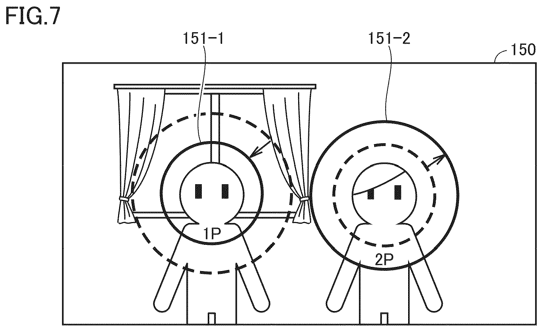

As an implementation example, in the setting screen 150, a shape of a range indicated by the pointer 151 may be fixed, but a shape of a range indicated by the pointer 151 may be able to be changed according to a user operation. FIG. 7 is a diagram for explaining a change example of a shape of a range indicated by a pointer in the setting screen 150.

As shown in FIG. 7, for example, by any user operating the controller 200, a range indicated by the pointer 151 displayed in the setting screen 150 may be able to be enlarged or reduced. That is, a size of a range indicated by the pointer 151 may be changed.

A change of a shape of a range indicated by the pointer 151 may include a change of a shape of a range indicated by the pointer 151, for example, from a circular frame to a rectangular frame, in addition to or instead of a change of a size of a range.

As shown in FIG. 7, the game apparatus 100 may change a size of a range indicated by each pointer 151 corresponding to each controller 200 based on an input to each of the plurality of controllers 200. By changing a size of a range indicated by the pointer 151, setting of the pointer 151 can be facilitated. Thereby, usability can be improved.

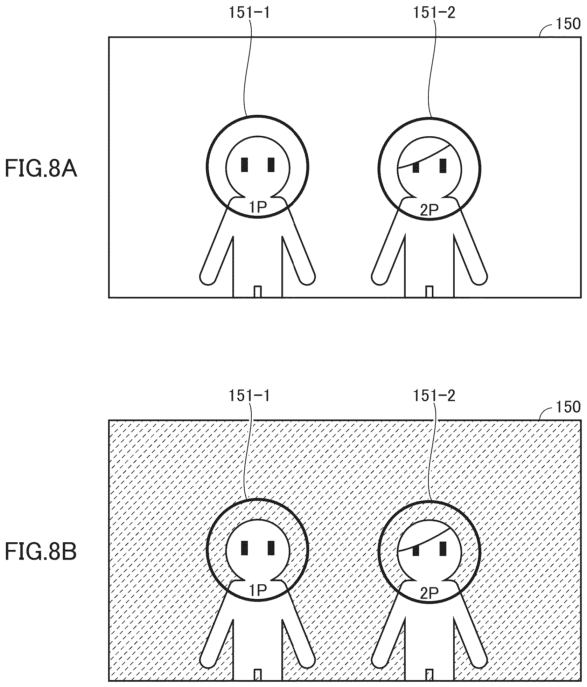

As an implementation example, in the setting screen 150, a range other than a user included in a video image may be masked. FIGS. 8A and 8B are diagrams for explaining a mask process example of a video image in the setting screen 150.

As shown in FIGS. 8A and 8B, for example, anything other than the person(s) included in the video image may be masked, and only a person may be cropped and displayed. FIG. 8A shows an example in which a background around a person included in a video image is set to white or a transparent color, and FIG. 8B shows an example in which a background around a person included in a video image is set to an arbitrary image or pattern.

In FIGS. 8A and 8B, it can also be said that a whole body of a person in the field of view 119 of the camera 118 is displayed. Note that a mask process may be performed on parts other than an upper body of a person, or a mask process may be performed on parts other than a face of a person. For example, in the latter case, a video image in which parts other than a face of a person are masked may be displayed. That is, a display may be such that a face of a person is cropped.

In this way, a video image in which an area other than a range including at least a face of each of one or more persons within the field of view 119 of the camera 118 is masked may be displayed. By displaying a masked video image, at least a face of a person stands out, so that setting of the pointer 151 can be facilitated. Thereby, usability can be improved.

Note that presence or absence of a mask or a type of a background may be changed by any user operating the controller 200.

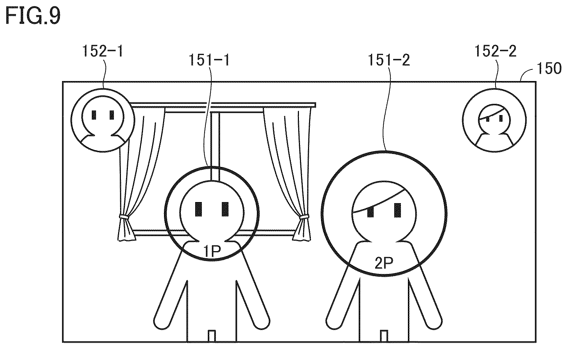

As an implementation example, in the setting screen 150, a video image of a range indicated by the pointer 151 may be displayed. FIG. 9 is a diagram showing a display example of a reference video image in the setting screen 150. As shown in FIG. 9, for example, when the pointers 151-1 and 151-2 are positioned, reference video images 152-1 and 152-2 corresponding to ranges indicated by the pointers 151-1 and 151-2 may be respectively displayed.

The reference video image 152 may continue to be displayed from before a position of the pointer 151 is set, or may be displayed after a position of the pointer 151 is set. Further, when a position of the pointer 151 is set, the reference video image 152 may be hidden.

Presence or absence of display of the reference video image 152 in the setting screen 150 may be able to be switched by any user operating the controller 200. Switching of presence or absence of display of the reference video image 152 may be set for each pointer 151.

Regardless of a shape of a range indicated by the pointer 151, a display size of the reference video image 152 may be constant. For example, in FIG. 9, a range indicated by the pointer 151-1 and a range indicated by the pointer 151-2 are different, but shapes of the reference video image 152-1 and the reference video image 152-2 are identical. In this case, enlargement ratios or reduction ratios of moving images displayed as the reference video image 152-1 and the reference video image 152-2 may be different from each other.

Alternatively, a size of the reference video image 152 may be determined in association with a size of a range indicated by the pointer 151. For example, a size of the reference video image 152 may be proportional to a size of a range indicated by the pointer 151.

The reference video image 152 may be arranged, for example, at a predetermined position in the setting screen 150, or may be arranged at a position selected by a user. The reference video image 152 may be arranged at a position based on the corresponding pointer 151. For example, the reference video image 152 may be arranged above or below the corresponding pointer 151 and the like. In this case, when the pointer 151 moves, the reference video image 152 may also move following the pointer 151.

The reference video image 152 may be arranged superimposed on a video image displayed in the setting screen 150 and the like, or may be arranged at a position different from a video image.

As shown in FIG. 9, the game apparatus 100 may display a reference video image 152 indicating a range of a video image corresponding to a current position of the pointer 151 corresponding to each controller 200 while the pointer 151 is being moved based on an input to the corresponding controller 200. Since a user can adjust a position of each pointer 151 while referring to the reference video image 152, usability can be improved. By the reference video image 152 being displayed at a position different from a position of the corresponding pointer 151, a user can confirm a current position of the pointer 151 and the reference video image 152 at the current position together.

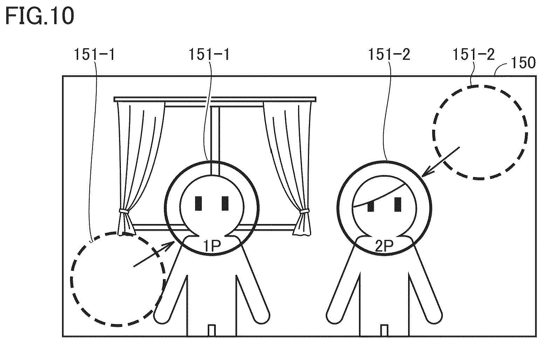

As an implementation example, in the setting screen 150, the pointer 151 may be positioned based on a recognition result of a face of a person. FIG. 10 is a diagram for explaining a positioning process example of the pointer 151 in the setting screen 150.

The game apparatus 100 may recognize a face of each of one or more persons included in a video image and arrange each pointer 151 at a position indicating a face of a recognized person. Recognition of a face of a person may be based on an arbitrary recognition algorithm.

As shown in FIG. 10, for example, by any user operating the controller 200 (for example, pressing a specific button), the pointer 151 which had been arranged at an arbitrary position corresponding to the controller, or all pointers 151, may be automatically arranged at a position of a face of a person.

In a case where the pointer 151 is automatically arranged, the game apparatus 100 may move, based on an input to the controller 200, each pointer 151 to a position indicating a face closest to a current position of each pointer 151. In the example shown in FIG. 10, before movement, the pointer 151-1 is located on a left side of a screen, and the pointer 151-2 is located on a right side of a screen. In this state, for example, when any user performs a predetermined operation, the pointer 151-1 may move to a position indicating a face of a user on a left side of a screen closest to a current position before movement, and the pointer 151-2 may move to a position indicating a face of a user on a right side of a screen closest to a current position before movement. By moving the pointer 151 to a position indicating a face closest to a current position of the pointer 151, a possibility that movement of the pointer 151 follows an intention of a user can be increased.

In a case where the pointer 151 is automatically arranged at a position of a face of a person, a plurality of pointers 151 may be arranged at a position of a face of the same person, or may be respectively arranged at positions of faces of different persons. For example, in a case where a closest face of a person is the same for each of a plurality of pointers, the plurality of pointers may be arranged at a position of a face of the person. Alternatively, for example, one pointer among a plurality of pointers may be arranged at a position of a face of the person, and another pointer may be arranged at a position of a face of another person, for example, a face of a person next closest to a position of the other pointer.

When a face of a person is recognized in an acquired video image, the game apparatus 100 may arrange the pointer 151 at a position of a face of a recognized person even if there is no user operation. For example, when display of the setting screen 150 is instructed, if a face of a person can be recognized in an acquired video image, a position of a face of the recognized person may be determined as an initial position of the pointer 151.

When a face of a person is recognized in an acquired video image, the game apparatus 100 may present a position of a face of the recognized person to a user as a candidate for a destination of movement of the pointer 151, and move the pointer 151 to a selected candidate according to a user operation.

In addition to or instead of the pointer 151 being arranged at a position of a face of a person, a shape of a range indicated by a pointer may be changed. For example, in a case where a face of a user displayed in the setting screen 150 is large, a shape of a range indicated by a pointer may be made larger than in a case where a face of a user is small.

After the pointer 151 is arranged at a position of a face of a person, the pointer 151 may be further moved based on a further input to the controller 200, or a shape of a range indicated by a pointer may be changed.

After the pointer 151 is arranged at a position of a face of a person, the pointer 151 may be arranged at a position of a face of another person based on a further input to the controller 200. For example, the pointer 151 may be arranged at a position of a face of a person located to the right of the face of the person currently indicated by the pointer. For example, a number is set for each face of a person included in the setting screen 150, and each time an input to the controller 200 is performed, the pointer 151 may be arranged at a position of a face of a person corresponding to a larger number.

In this way, by moving or arranging the pointer 151 based on a recognition result of a face of a person, movement or arrangement of the pointer 151 can be facilitated, so that usability can be improved.

As shown in FIG. 5 to FIG. 10, the game apparatus 100 displays a video image and moves, based on an input to each of a plurality of controllers 200, each pointer 151 corresponding to each controller 200 on the displayed video image. By moving the pointer 151 on a video image, usability can be improved. On the other hand, each pointer 151 corresponding to each controller 200 may be moved in a region different from a displayed video image.

FIG. 11 is a diagram showing another example of a setting screen 150A provided in the game apparatus 100 according to this embodiment. The setting screen 150A shown in FIG. 11 includes, for example, a moving image display unit 154 that displays a video image, a setting receiving unit 156 that receives setting of one or more pointers 151, and one or more reference video images 152 corresponding to ranges indicated by one or more pointers 151.

A user refers to the setting screen 150A shown in FIG. 11 and adjusts a position, a size, and the like of the pointer 151 displayed in the setting receiving unit 156. In this way, the game apparatus 100 may move, based on an input to each controller 200, each pointer 151 corresponding to each controller 200 in a region different from a displayed video image. A video image similar to that displayed in the moving image display unit 154 may be displayed in the setting receiving unit 156, or may be omitted from the setting receiving unit 156.

In the setting screen 150A, the reference video image 152 may be displayed in a region other than the moving image display unit 154 and the setting receiving unit 156, or may be displayed superimposed on the setting receiving unit 156. Note that the reference video image 152 does not need to be displayed.

Implementation examples described with reference to FIG. 5 to FIG. 11 described above can be appropriately combined, or some implementation examples do not need to be combined.

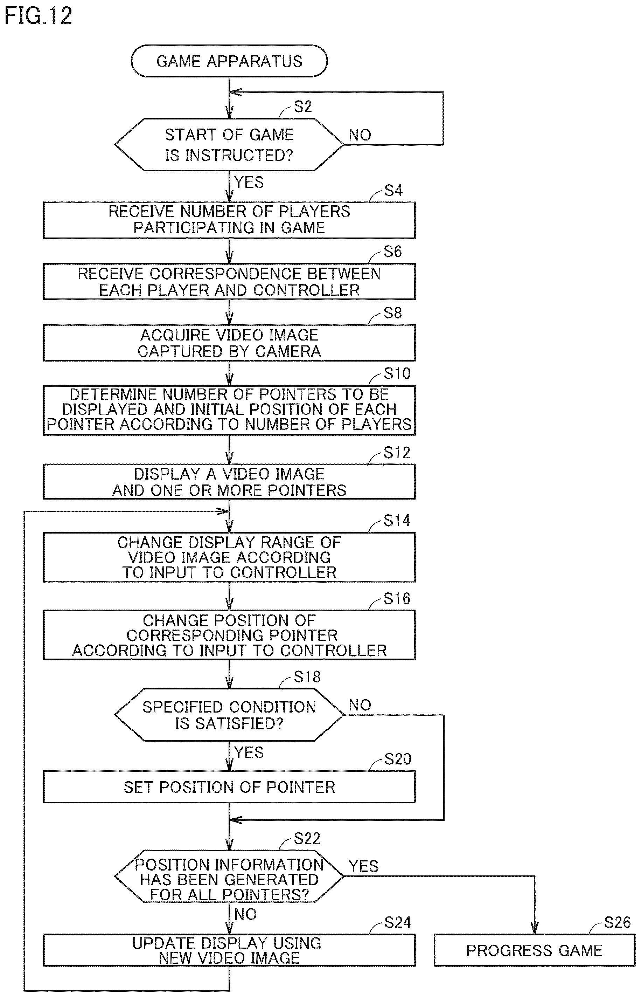

FIG. 12 is a flowchart showing a process example executed by the game apparatus 100 according to this embodiment. Each step shown in FIG. 12 may be realized by one or more processors 102 executing at least one of the system program 112 or the game application 126.

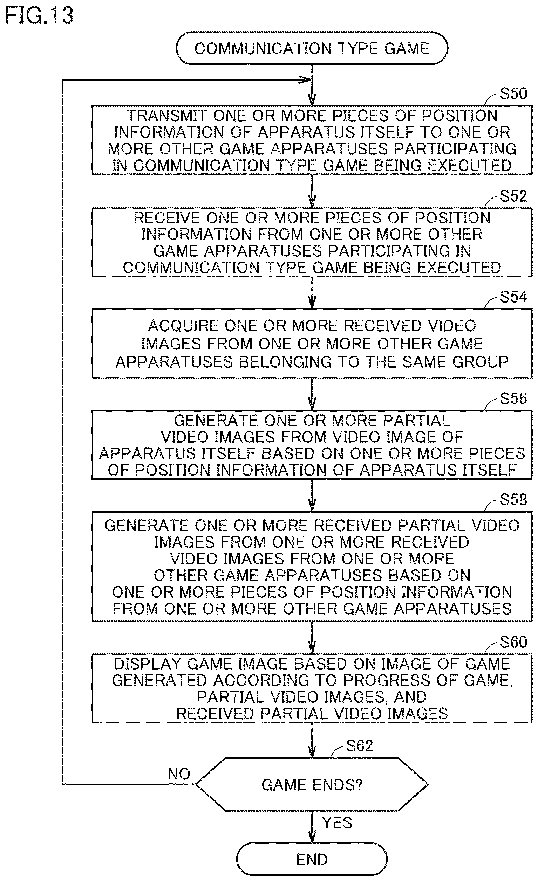

Processes described in this embodiment may include other processes or may not include some processes. Further, an execution order of each process is an example, and for example, a plurality of processes may be executed in parallel, or some processes may be executed in an order reverse to description. For convenience of description, processes are divided into units called steps, but these units of division are arbitrary, and a plurality of steps may be integrated, or one step may be divided into a plurality. Processes in FIG. 12 and FIG. 13 are repeatedly executed, as an example, at predetermined intervals (for example, process frame intervals executed every 1/60 of a second). The same applies to description below.

Referring to FIG. 12, when a start of a game is instructed (YES in step S2), the game apparatus 100 receives the number of players participating in the game (step S4). The game apparatus 100 receives a correspondence between each player and the controller 200 according to the received number of players (step S6). Note that processes of steps S4 and S6 may be executed as a series of processes. By these processes, it is determined which controller 200 each player operates.

The game apparatus 100 acquires a video image captured by the camera 118 (step S8). The game apparatus 100 determines the number of pointers 151 to be displayed and an initial position of each pointer 151 according to the number of players (step S10). The game apparatus 100 displays a video image and one or more pointers 151 (step S12).

The game apparatus 100 changes a display range of a video image according to an input to the controller 200 (step S14). If there is no input to the controller 200, a process of step S14 may be skipped.

The game apparatus 100 changes a position of a corresponding pointer 151 according to an input to the controller 200 (step S16). Note that the game apparatus 100 may change a shape of a range indicated by a corresponding pointer 151 according to an input to the controller 200. If there is no input to the controller 200, a process of step S16 may be skipped.

The game apparatus 100 determines whether a predetermined condition is satisfied (step S18). When a predetermined condition is satisfied (YES in step S18), the game apparatus 100 sets a position of the pointer 151 for which the predetermined condition is satisfied (step S20). That is, the game apparatus 100 generates position information regarding the pointer 151 for which the predetermined condition is satisfied.

For example, a predetermined condition may include that setting of a position is instructed from a controller 200 associated with any pointer, or that a predetermined time has elapsed. Note that whether a predetermined condition is satisfied may be determined for each pointer 151 or may be determined for all pointers 151 displayed.

If a predetermined condition is not satisfied (NO in step S18), a process of step S20 is skipped. The game apparatus 100 determines whether position information has been generated for all pointers 151 (step S22).

If position information has not been generated for all pointers 151 (NO in step S22), the game apparatus 100 updates a display using a new video image acquired from the camera 118 (step S24). Then, processes after step S14 are repeated.

If position information has been generated for all pointers 151 (YES in step S22), the game apparatus 100 progresses a game (step S26). During progress of a game, the game apparatus 100 generates a partial video image 161 from a video image based on generated position information, and displays the generated partial video image 161 at a position corresponding to a player.

### [D. Utilization Example of Camera Moving Image in Game Application]

Not limited to the game image 160 shown in FIG. 5 described above, in a game application, a video image may be utilized in any manner.

A game in which a video image is utilized may be any game, but may be, for example, a racing game, a card game, a board game, an FPS (First Person Shooter) game, a TPS (Third Person Shooter) game, an action game, a role-playing game, and the like.

A game in which a video image is utilized may be a game executed in one game apparatus 100, or may be a communication type game via Internet communication or local communication.

A display timing, a display position, and a manner of display of a partial video image generated from a video image based on position information may be any timing, position, and mode. For example, during progress of a game, a partial video image may be displayed at a predetermined position, or may be displayed in the vicinity of a game object such as a character operated by the controller 200. Further, a target itself operated by the controller 200 may be a partial video image.

A partial video image may be displayed in the vicinity of a game object operated by the controller 200. Further, a partial video image may be displayed at a position showing a place where a game object exists and the like. For example, a partial video image of each player may be displayed in association with a position of each game object on a map.

A partial video image may be displayed in the vicinity of a fixed user interface displaying parameters and the like of a game object operated by the controller 200. For example, a partial video image may be displayed in the vicinity of a fixed user interface in which HP (Hit Point) and the like of each player is displayed.

For example, in a game in which a specific character is not operated such as a mahjong game or a playing card game, a partial video image may be displayed in the vicinity of various positions (for example, a seating position, a user interface, and an object, and the like) corresponding to each controller 200. Note that in a game in which an object such as a specific character is not operated in this way, a concept of a player can exist.

Further, when a progress or a result of a game is shown, a partial video image corresponding to a position indicating a player may be displayed. In a scene in which a result of a game is displayed in a ranking format and the like, a partial video image showing each player may be displayed at a position corresponding to a player of each rank.

When another player such as an attack target or a support target is selected, a partial video image corresponding to a candidate player may be displayed in the vicinity of choices or as choices. For example, on a board of a roulette that decides to which player a reward or a penalty is given, a partial video image showing each player may be displayed.

The manner of display of a partial video image described above is an example, and a partial video image can be displayed at a position corresponding to each player in various modes according to progress of a game or a design of a game application and the like.

A partial video image utilized in a game application may be identical to a video image included in a range indicated by a pointer, or may not be identical. For example, a video image of a range narrower than a range indicated by a pointer may be generated as a partial video image.

A partial video image may be a result of image processing on a partial video image generated from a video image based on position information (for example, a cropping process along a contour of a face, a face processing process, and the like). As another example of image processing, processing such as putting a crown or a hat on a partial video image cropped from a video image or growing a beard may be performed. As another example of image processing, a partial video image cropped from a video image may be tilted, rotated, stretched, or flipped horizontally.

A partial video image may be displayed with a frame added to a periphery. A manner of display of an added frame may be changed according to a game situation.

### [E. Utilization Example of Camera Moving Image in Communication Type Game]

Processes according to this embodiment are also applicable to a communication type game via Internet communication or local communication. Hereinafter, a process example in a case of a game communicating with another game apparatus 100 will be described.

For example, by a plurality of game apparatuses 100 communicating, a communication type game in which a plurality of players can participate is provided. A configuration may be such that one player participates via one game apparatus 100, or a configuration may be such that a plurality of players can participate via one game apparatus 100.

As an example, it is assumed that player 1 and player 2 participate in a communication type game from the game apparatus 100-1, and player 3 and player 4 participate in the communication type game from the game apparatus 100-2. At this time, a game image is generated in each of the game apparatus 100-1 and the game apparatus 100-2. Note that generation of a game image may be performed in one game apparatus 100, and a generated game image may be transmitted to the other game apparatus 100. A partial video image is used for the communication type game. The game apparatus 100-1 generates two partial video images respectively corresponding to player 1 and player 2 from a video image based on, for example, the process example shown in FIG. 12. Similarly, the game apparatus 100-2 generates two partial video images respectively corresponding to player 3 and player 4 from a video image. Then, the game apparatus 100-1 and the game apparatus 100-2 respectively generate game images in which partial video images respectively corresponding to players 1 to 4 are used, based on partial video images generated by themselves and partial video images received from the other game apparatus 100. In this way, when a communication type game is executed, game control information and a partial video image cropped from a video image are transmitted and received between a plurality of game apparatuses 100, so that a game image may be generated in each game apparatus 100.

As another example, when a communication type game is executed, a video image may be transmitted and received without being cropped based on a pointer, and a game apparatus 100 that receives a video image may crop a partial video image. As an example, in a case where a communication type game via the Internet is executed together with the chat application 114, the game application 126 being executed may acquire a received video image from another game apparatus 100 via the chat application 114 being executed. A received video image is a moving image to be displayed on a chat screen in the chat application 114 being executed. Then, the game application 126 may crop a partial video image from the acquired received video image and use the partial video image for a game. At this time, a received video image may not be able to be acquired from a game apparatus 100 not belonging to the same group.

A received video image is based on a video image captured by a camera 118 acquired by another game apparatus 100, and may be the same as a video image acquired by another game apparatus 100 or may be a result of some process. For example, a received video image may be a moving image to which image processing according to a manner of display as described later is applied.

The game application 126 acquires a received video image and one or more pieces of position information from another game apparatus 100, and utilizes a received video image from another game apparatus 100 using the acquired one or more pieces of position information. In this embodiment, a received video image is received via a communication path used by the chat application 114, and position information is received via a communication path used by the game application 126. Further, the game application 126 transmits one or more pieces of position information to another game apparatus 100.

In this way, the game apparatus 100 displays, at a position corresponding to a player of the other game apparatus 100 in an image of a game, a received partial video image generated from a received video image based on position information received from another game apparatus 100. Compared to a case where both a received video image and a received partial video image are received, communication volume can be suppressed. Further, since position information may have a smaller data amount than a partial video image, a data amount flowing through a communication path used by the game application 126 can be suppressed.

Note that even in a case where the chat application 114 is not executed and the game application 126 is executed, the game apparatus 100 may receive a video image and position information from another game apparatus 100, crop a partial video image from the video image, and use the partial video image for a game.

FIG. 13 is a flowchart showing a process example when the game apparatus 100 according to this embodiment executes a communication type game. Note that it is assumed that a process and the like shown in FIG. 12 is executed in advance, and position information of each player operating the controller 200 of the game apparatus 100 is generated in advance.

Referring to FIG. 13, the game apparatus 100 transmits one or more pieces of position information of the apparatus itself to one or more other game apparatuses 100 participating in a communication type game being executed (step S50).

The game apparatus 100 transmits a video image captured by the camera 118 of the apparatus itself to another game apparatus 100 belonging to the same group. This process may be handled by the chat application 114 being executed.

The game apparatus 100 receives one or more pieces of position information from one or more other game apparatuses 100 participating in a communication type game being executed (step S52). The game apparatus 100 acquires one or more received video images from one or more other game apparatuses 100 belonging to the same group (step S54). The game application 126 being executed may acquire one or more received video images from another game apparatus 100 via the chat application 114 being executed.

The game apparatus 100 generates one or more partial video images from a video image of the apparatus itself based on one or more pieces of position information of the apparatus itself (step S56), and generates one or more received partial video images from one or more received video images from one or more other game apparatuses based on one or more pieces of position information from one or more other game apparatuses 100 (step S58).

The game apparatus 100 displays a game image based on an image of a game generated according to progress of a game, partial video images generated in step S56, and received partial video images generated in step S58 (step S60).

Processes of steps S50 to S60 are repeated until a game ends (YES in step S62).

Note that since it is considered that a possibility that position information is changed during execution of a game is not high, an execution cycle of transmission or reception of position information shown in step S50 or step S52 may be longer than a display cycle of a game image.

### [F. Display Mode in Chat Application]

In the game apparatus 100 according to this embodiment, if the chat application 114 is being executed, a video image captured by the camera 118 may be processed by the chat application 114 being executed and transmitted to another game apparatus 100 as a part of communication data 10. In such a case, the game application 126 being executed acquires a video image after being processed by the chat application 114 being executed.

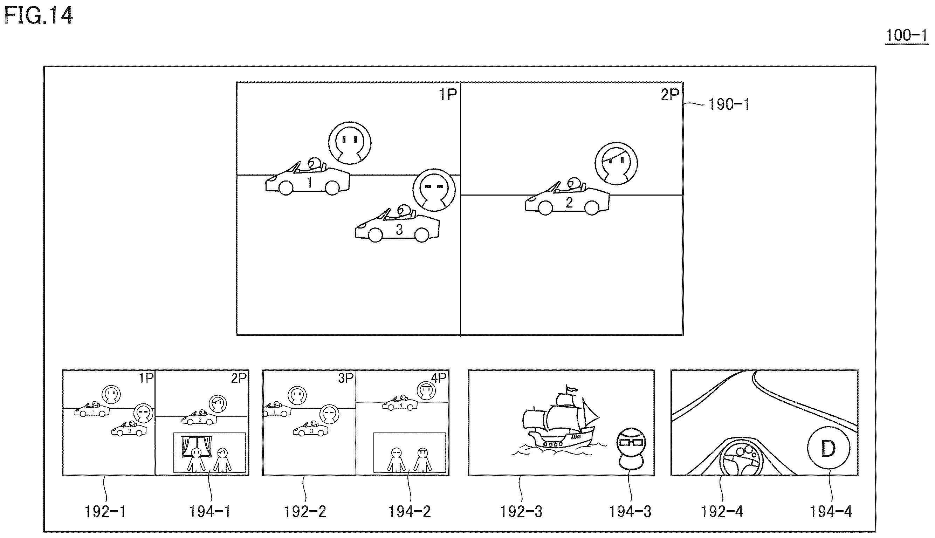

FIG. 14 is a diagram for explaining an example of a chat screen generated in the game apparatus 100 according to this embodiment. The chat screen shown in FIG. 14 is mainly generated by the chat application 114 being executed.

As an example, as shown in FIG. 2, four accounts belong to the same group, and game apparatuses 100-1 to 100-4 respectively correspond to the four accounts. In FIG. 2, as an example, game apparatuses 100-1 to 100-3 distribute video images, and a game apparatus 100-4 does not distribute video images. The game apparatus 100-1 and the game apparatus 100-2 are performing a communication type game. Two players participate in the communication type game from each of the game apparatus 100-1 and the game apparatus 100-2.

FIG. 14 shows a chat screen example displayed on the display 120 of the game apparatus 100-1. The chat screen shown in FIG. 14 is an example, and a screen configuration of a chat screen created utilizing communication data 10 is not limited.

As shown in FIG. 14, the chat screen example of the game apparatus 100-1 includes a game image 190-1 of the game application 126 being executed in the game apparatus 100-1. In the game application being executed in the game apparatus 100-1, when two players participate, a screen is divided into left and right, and in each divided screen, each player and a periphery of each player are displayed. The chat screen example of the game apparatus 100-1 includes distribution moving images 192-1 to 192-4 distributed by the game apparatuses 100-1 to 100-4 respectively. In this example, the game apparatus 100-1 distributes the distribution moving image 192-1 including the game image 190-1 to other game apparatuses 100-2 to 100-4.

In other game apparatuses 100-2 to 100-3, the game image 190-1 of the game application being executed in its own game apparatus 100 and distribution moving images 192-1 to 192-4 are also displayed. Note that a display order of the distribution moving images 192-1 to 192-4 may be different for each game apparatus 100 or may be the same.

In the distribution moving images 192-1 to 192-3, video images 194-1 to 194-3 respectively distributed by the game apparatuses 100-1 to 100-3 are superimposed. On the other hand, since the game apparatus 100-4 does not distribute video images, an icon image 196-4 showing an account corresponding to the game apparatus 100-4 is superimposed on the distribution moving image 192-4.

Each of the video images 194-1 to 194-3 has an expression corresponding to a display mode set in a game apparatus 100 of a distribution source.

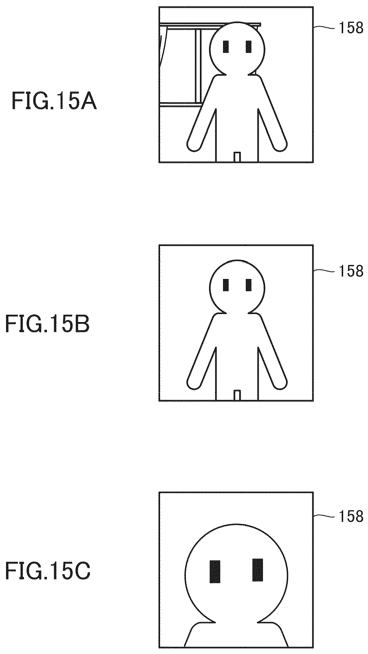

FIGS. 15A to 15C are diagrams for explaining examples of a display mode in the game apparatus 100 according to this embodiment. In FIGS. 15A to 15C, as an example, three display modes are illustrated.

FIG. 15A shows an example of a video image 158 in a case where a full-view mode is selected as an example of a display mode. The video image 158 shown in FIG. 15A is substantially identical to a video image captured by the camera 118.

FIG. 15B shows an example of a video image 158 in a case where a cropping mode is selected as an example of a display mode. In the video image 158 shown in FIG. 15B, only a person included in a video image captured by the camera 118 is cropped. In a case where a plurality of persons are included in a video image, a plurality of persons may be cropped.

FIG. 15C shows an example of a video image 158 in a case where a face mode is selected as an example of a display mode. In the video image 158 shown in FIG. 15C, a periphery of a face of a person included in a video image captured by the camera 118 is cropped. Note that when a face moves in a video image, a cropping position also follows the face. In a face mode, a camera image may be cropped along a contour of a face, or may be cropped in, for example, a circular shape in a state in which a background in the vicinity of a face is included. In a case where a plurality of persons are included in a video image, a face of one person may be cropped.

Note that in the chat screen shown in FIG. 14 described above, a user of the game apparatus 100-1 selects a full-view mode, and users of the game apparatuses 100-2 and 100-3 select a cropping mode.

When the chat application 114 and the game application 126 are simultaneously being executed, the game application 126 being executed may acquire the video image 158 generated according to any display mode shown in FIGS. 15A to 15C. At this time, in the setting screen 150, the video image 158 generated according to any display mode shown in FIGS. 15A to 15C may be displayed.

In a case where a plurality of users play in one game apparatus 100, a pointer 151 corresponding to each player is displayed in the setting screen 150. By selecting a full-view mode or a cropping mode shown in FIGS. 15A to 15C, a plurality of users can be displayed, so that a display position of a different user can be specified as a cropping position of a partial video image corresponding to each player.

On the other hand, in a case where one user plays in one game apparatus 100, position specification with the pointer 151 in the setting screen 150 may be omitted by selecting a face mode shown in FIGS. 15A to 15C.

Note that even in a case where one user participates in a game in one game apparatus 100, a position of the pointer 151 as described above may be set. For example, in FIG. 5 to FIG. 11, one pointer 151 is displayed. Further, since a position of one pointer 151 is set for a video image captured by the camera 118, one partial video image is generated from a video image.

Further, in a case where one user participates in a game in one game apparatus 100, a video image of a predetermined range within the field of view 119 of the camera 118 may be used as a partial video image. For example, a predetermined range may be set at a central part of the field of view 119 of the camera 118. That is, the game apparatus 100 may display, at a position corresponding to the one player in an image of a game, a video image of a predetermined range within the field of view 119 of the camera 118 when a game in which one player corresponding to one controller participates is progressed. Note that the game apparatus 100 may perform a process of cropping a face of a person from a video image of a predetermined range of the field of view 119. By adopting a method using a video image of a predetermined range within the field of view 119, a user does not need to adjust a position of the pointer 151 and the like.

The game application 126 may provide a user interface for changing a display mode managed in the chat application 114 according to the number of players participating in a game and the like.

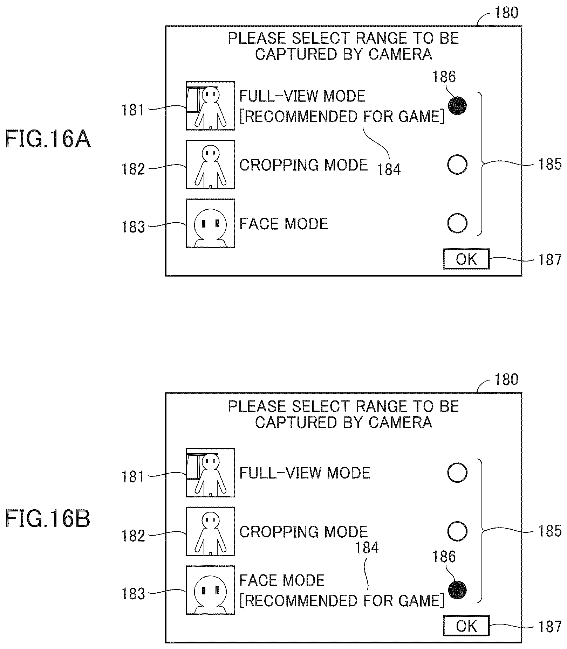

FIGS. 16A and 16B are schematic diagrams each showing an example of a selection screen 180 of a display mode in the game apparatus 100 according to this embodiment. The selection screen 180 shown in FIGS. 16A and 16B may be displayed based on a request by the game application 126. In the selection screen 180, as an example, three display modes selectable in the chat application 114 (for example, a full-view mode 181, a cropping mode 182, and a face mode 183) are selectable.

FIG. 16A shows an example of the selection screen 180 in a case where it is assumed that it is necessary to capture a plurality of users with the camera 118 of one game apparatus 100. In this example, an object 184 for recommending a full-view mode 181 to a user (for example, text "Recommended for Game") is displayed. Further, a radio button 185 corresponding to a recommended display mode may be selected as an initial value (initial value 186).

FIG. 16B shows an example of the selection screen 180 in a case where it is assumed that one user is captured with the camera 118 of one game apparatus 100. In this example, an object 184 for recommending a face mode 183 to a user (for example, text "Recommended for Game") is displayed. Further, a radio button 185 corresponding to a recommended display mode may be selected as an initial value (initial value 186).

By an OK button 187 being selected, a selection command of a display mode is given from the game application 126 to the chat application 114. By a selection command of a display mode being given, a display mode in the chat application 114 is set, and the game application 126 acquires a video image according to the set display mode.

### [G. Other Embodiments]

A video image may be available even in applications other than a game application. For example, in a video conferencing application, respective partial video images cropped based on position information can be used.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A computer-implemented method comprising:
acquiring (S8) a video image (158) captured by a camera (118);
moving (S16) a pointer (151) corresponding to each of a plurality of controllers (200) based on an input to each of the plurality of controllers;
setting (S20) a position of the pointer corresponding to each controller;
progressing (S26) a game in which a player corresponding to each of the plurality of controllers participates; and
displaying, at a position corresponding to each player in an image (160) of the game, a second video image (161) of each player generated from the video image based on the set position of the pointer corresponding to each controller.

2. The computer-implemented method according to claim 1, further comprising:
displaying the video image; and
moving, based on an input to each of the plurality of controllers, the pointer corresponding to each controller on the displayed video image.

3. The computer-implemented method according to claim 1 or 2, further comprising:
recognizing a face of each of one or more persons included in the video image; and
arranging each pointer at a position indicating the face of the corresponding recognized person.

4. The computer-implemented method according to claim 3, further comprising:
moving each pointer to a position indicating a face closest to a current position of the respective pointer based on an input to each of the plurality of controllers.

5. The computer-implemented method according to claim 2, wherein
the displayed video image is masked in an area other than a region including at least a face of one or more persons within a field of view (119) of the camera.

6. The computer-implemented method according to claim 2 or 5, further comprising:
changing, based on an input to at least one of the plurality of controllers, a display range of the displayed video image; and
moving the pointer corresponding to each controller on the video image having the changed display range.

7. The computer-implemented method according to any of claims 2, 5, and 6, further comprising:
changing a shape of a range indicated by the pointer corresponding to each controller based on an input to the corresponding controller; and
generating, based on a position of the pointer corresponding to each controller and the range indicated by the pointer, the second video image of each player from the video image.

8. The computer-implemented method according to any of claims 2 and 5 to 7, further comprising:
displaying a reference video image (152) indicating a range of the video image corresponding to a current position of the pointer corresponding to each controller while the pointer is being moved based on an input to the corresponding controller.

9. The computer-implemented method according to any of claims 2 and 5 to 8, further comprising:
changing a shape of a range indicated by the pointer corresponding to each controller based on an input to the corresponding controller; and
displaying a reference video image indicating a range of the video image corresponding to a current position of the pointer corresponding to each controller while the pointer is being moved based on an input to the corresponding controller, and
wherein a display size of the reference video image is constant regardless of a size of the range indicated by the pointer.

10. The computer-implemented method according to any of claims 1 to 9, wherein
a position of the pointer is allowed to overlap with a position of another pointer.

11. The computer-implemented method according to any of claims 1 to 10, wherein
the game is a game that communicates with another information processing apparatus (100),
the computer-implemented method further comprises:
receiving, from the another information processing apparatus, a received video image (194) based on a video image in the another information processing apparatus and position information based on a position of a pointer set in the another information processing apparatus; and
displaying a third video image (161) generated from the received video image based on the position information received from the another information processing apparatus at a position corresponding to a player of the another information processing apparatus in the image of the game.

12. The computer-implemented method according to any of claims 1 to 11 further comprising:
moving one pointer corresponding to a controller based on an input to the one controller;
setting a position of the one pointer;
progressing a game in which one player corresponding to the one controller participates; and
displaying, at a position corresponding to the one player in the image of the game, a second video image of the one player generated from the video image based on the set position of the one pointer.

13. The computer-implemented method according to any of claims 1 to 12 further comprising:
displaying, at a position corresponding to one player in the image of the game, a video image of a predetermined range within a field of view of the camera while the game in which the one player corresponding to one controller participates is in progress.

14. A computer program (126; 112) causing a computer (100) to perform the computer-implemented method according to any of claims 1 to 13.

15. A system (100) configured to perform the computer-implemented method according to any of claims 1 to 13.
